# DEMANDE DE BREVET EUROPEEN

(11) **EP 4 686 647 A1**
(43) Date de publication de la demande: **04.02.2026**
(21) Numéro de dépôt: 25192575.6
(22) Date de dépôt: 29.07.2025
(51) Int. Cl.: B63G 1/00, B63G 8/28, B63G 11/00

(54) **SYSTÈME DE LARGAGE DE DRONE À PARTIR D'UN ENGIN SOUS-MARIN**

(30) Priorité: 30.07.2024 FR 2408420
(71) Demandeur: Alseamar, 75008 Paris (FR)
(72) Inventeur: JACQUES, Olivier, 83136 FORCALQUEIRET (FR)
(74) Mandataire: Lavoix

(57) **Abrégé**

Le système de largage de drone comprend :
- une pluralité de capsules (6), chaque capsule (6) renfermant un drone et étant configurée pour remonter à la surface de l'eau du fait de sa flottabilité de la capsule (6) et pour s'ouvrir une fois que la capsule (6) a atteint la surface de l'eau pour libérer le drone,
- un magasin (8) pour le stockage des capsules (6), le magasin (8) étant en communication fluidique permanente avec l'extérieur de sorte que l'eau environnante remplit le magasin (8) lorsque l'engin sous-marin (2) est en plongée, et
- un dispositif de retenue (16) possédant une configuration de retenue dans laquelle le dispositif de retenue (16) retient les capsules (6) dans le magasin (8) et une configuration de largage dans laquelle le dispositif de retenue (16) libère une capsule (6) pour sa remontée à la surface de l'eau.

## Description

La présente invention concerne un système de largage de drone à partir d'un engin sous-marin.

Pour la réalisation de missions de surveillance, par exemple de surveillance du trafic maritime, il est utile de pouvoir déployer un drone à partir d'un engin sous-marin. Il peut être souhaitable de larguer le drone de manière discrète, par exemple pour surveiller un navire de surface procédant au nettoyage en mer de cuves à combustible, de manière illégale.

Un des buts de l'invention est de proposer un système de largage de drone à partir d'un engin sous-marin, le système de largage de drone étant simple et efficace.

A cet effet, l'invention propose un système de largage de drone à partir d'un engin sous-marin, le système de largage comprenant :
- une pluralité de capsules, chaque capsule renfermant un drone et présentant une flottabilité permettant à la capsule de remonter à la surface de l'eau, chaque capsule étant configurée pour s'ouvrir une fois que la capsule a atteint la surface de l'eau pour libérer le drone,
- un magasin pour le stockage des capsules, le magasin étant en communication fluidique permanente avec l'extérieur de sorte que l'eau environnante remplit le magasin lorsque l'engin sous-marin est en plongée, le magasin possédant une ouverture de sortie pour les capsules, et
- un dispositif de retenue possédant une configuration de retenue dans laquelle le dispositif de retenue retient les capsules à l'intérieur du magasin et une configuration de largage dans laquelle le dispositif de retenue libère une capsule pour la sortie de la capsule via l'ouverture de sortie et la remontée de la capsule libérée à la surface de l'eau du fait de la flottabilité de la capsule.

La prévision d'une capsule contenant le drone permet de larguer le drone lorsque l'engin sous-marin est en plongée. La capsule peut remonter à la surface de l'eau du fait de sa seule flottabilité pour libérer le drone à la surface de l'eau. Le largage du drone est ainsi réalisé de manière simple et discrète.

La prévision d'un magasin rempli par l'eau de mer et de capsules résistantes à la pression de l'eau environnante permet de simplifier le dispositif de largage en évitant de prévoir un espace de stockage à pression atmosphérique et un système de sas pour le largage d'une capsule à partir de l'engin sous-marin.

Le largage d'une capsule à partir du magasin rempli par l'eau environnante peut être effectué très simplement en libérant la capsule qui remonte alors à la surface du fait de sa flottabilité.

Selon des modes de réalisation particuliers, le système de largage comprend une ou plusieurs des caractéristiques optionnelles suivantes, prises individuellement ou selon toutes les combinaisons techniquement possibles :
- le système de largage comprend un dispositif de transmission configuré pour la transmission de données de mission au drone d'une ou plusieurs capsules reçues dans le magasin avant le largage de la ou des capsules ;
- le dispositif de transmission est configuré pour la transmission de données de mission au drone de la capsule qui sera la prochaine capsule larguée ;
- le dispositif de retenue est configuré pour libérer une capsule seulement après la transmission de données de mission au drone de cette capsule par le dispositif de transmission ;
- chaque capsule est étanche et résistante à la pression de l'eau, par exemple au moins jusqu'à une pression de 50 bars, de préférence au moins jusqu'à une pression de 700 bars ;
- chaque capsule comprend au moins deux parties de capsule, le drone étant reçu dans une des parties de capsule ;
- le système de largage comprend un système de relais de télécommunication configuré pour communiquer à distance avec le drone et/ou avec l'engin sous-marin ;
- le système de relais de télécommunication est disposé dans la capsule ou dans une bouée de communication distincte de la capsule et, de préférence, largable à partir de l'engin sous-marin ;
- le drone d'au moins une des capsules est équipé d'un traceur de géolocalisation, en particulier un traceur GPS, largable par le drone sur une cible à surveiller, en particulier un navire à surveiller ;
- le traceur de géolocalisation est muni d'un dispositif de fixation configuré pour retenir le traceur de géolocalisation sur une partie ferromagnétique de la cible à surveiller, par exemple une partie d'une coque de la cible à surveiller.
- le magasin est orienté sensiblement verticalement lorsque l'assiette de l'engin sous-marin est horizontale ;
- la capsule comprend une chambre possédant une ouverture de sortie fermée par un couvercle amovible et un piston reçu coulissant dans la chambre et séparant la chambre en un premier compartiment, délimité entre le piston et le couvercle, et recevant le drone, et un deuxième compartiment ;
- la capsule comprend un dispositif d'éjection, par exemple pneumatique, configuré pour séquentiellement générer une suppression dans le premier compartiment pour éjecter le couvercle puis générer une surpression dans le deuxième compartiment pour pousser le piston vers l'ouverture de sortie et éjecter le drone hors de la chambre.

L'invention concerne aussi un engin sous-marin comprenant un système de largage de drone tel que défini ci-dessus.

Dans des exemples de réalisation, le magasin est logé dans un kiosque de l'engin sous-marin de manière à larguer les capsules par un sommet du kiosque.

L'invention apparaîtra plus clairement à la lecture de la description qui va suivre, donnée uniquement à titre d'exemple non limitatif, et faite en référence aux dessins dans lesquels :
- les Figures 1 et 2 sont des vues schématiques partielles d'un engin sous-marin muni d'un système de largage de drone, respectivement dans une première configuration et une deuxième configuration ;
- la Figure 3 est une vue en coupe d'une capsule du système de largage de drone, la capsule étant à la surface de l'eau et ouverte pour libérer un drone logé dans la capsule ;
- la Figure 4 est une vue d'ensemble schématique d'un engin sous-marin muni d'un système de largage de drone, après largage d'un drone ;
- la Figure 5 est une vue en coupe d'une capsule selon un autre exemple, la capsule étant à la surface de l'eau et fermée ;
- la Figure 6 est une vue en coupe de la capsule de la Figure 5 après ouverture de la capsule et éjection du drone ;
- la Figure 7 est une vue d'ensemble schématique d'un engin sous-marin muni d'un système de largage de drone, après largage d'un drone, illustrant l'utilisation d'un système de relais de télécommunication disposé dans une bouée de communication ; et
- la Figure 8 est une vue de dessus schématique d'un système de largage de drone comprenant plusieurs magasin logé dans un même cylindre.

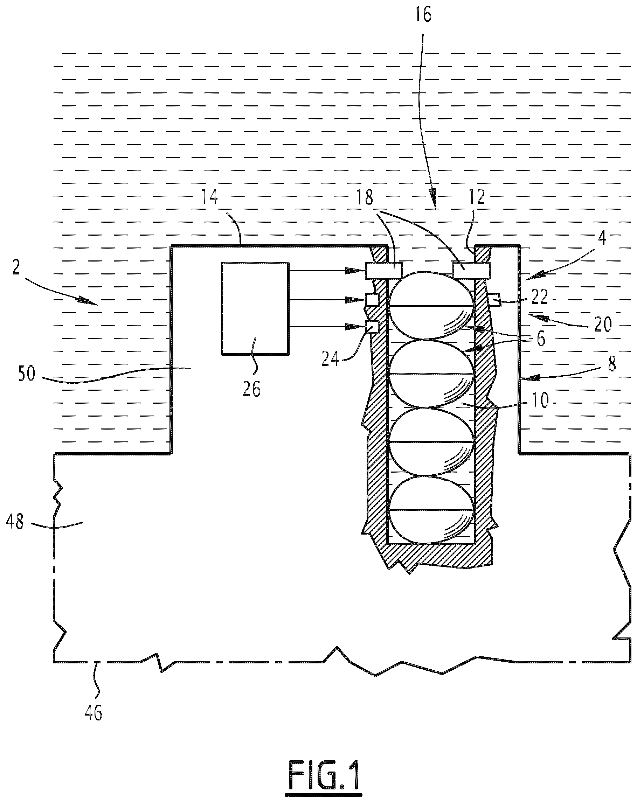

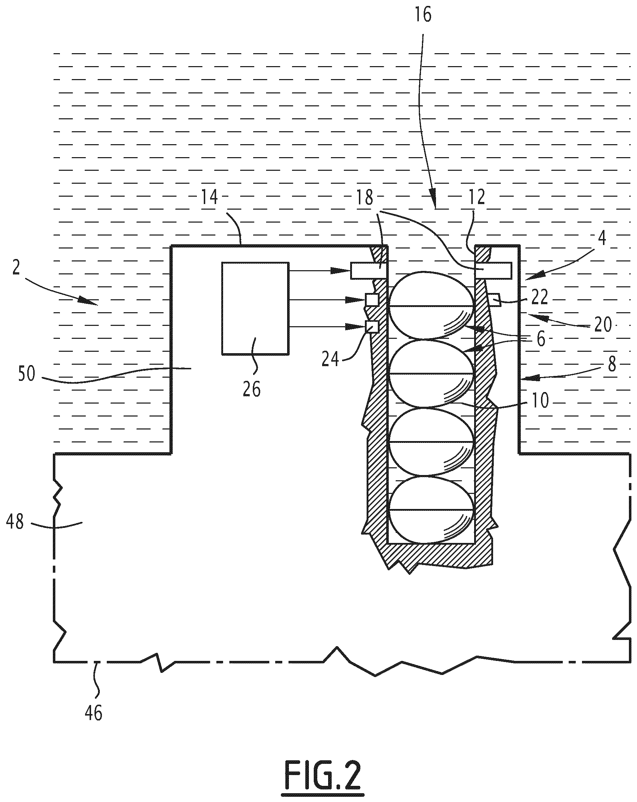

Tel qu'illustré sur les Figures 1 et 2, un engin sous-marin 2 est équipé d'un système de largage de drone 4 permettant de larguer des drones à partir de l'engin sous-marin 2, lorsque l'engin sous-marin 2 est en plongée sous la surface de l'eau.

Le système de largage de drone 4 permet de préférence de transmettre des données de mission à chaque drone et de surveiller l'état de chaque drone.

Le système de largage de drone 4 comprend des véhicules sous-marin de largage ou capsules de largage 6 (ci-après « capsule 6 »), chaque capsule 6 contenant un drone (non visible sur les Figures 1 et 2).

Chaque capsule 6 présente une flottabilité positive permettant à la capsule 6 de remonter à la surface de l'eau lorsque la capsule 6 est larguée sous l'eau à partir du système de largage de drone 4.

Le système de largage de drone 4 comprend un magasin 8 pour le stockage d'une pluralité de capsules 6. Chaque capsule 6 est fermée lorsqu'elle est stockée dans le magasin 8 et renferme un drone.

Le magasin 8 est en communication fluidique permanente avec l'extérieur, de telle manière que le magasin 8 est rempli d'eau environnante lorsque l'engin sous-marin 2 est en plongée.

L'engin sous-marin 2 est dépourvu de système de fermeture pour fermer le magasin 8 de manière étanche à l'eau.

Le système de largage de drone 4 est par exemple configuré pour libérer les capsules 6 une par une, chaque capsule 6 libérée sortant du magasin 8 pour rejoindre la surface de l'eau du fait de la flottabilité de cette capsule 6.

Le magasin 8 possède par exemple un conduit 10 configuré pour recevoir les capsules 6 et débouchant à l'extérieur par une ouverture de sortie 12, configurée pour permettre la sortie des capsules 6, de préférence une par une.

Le magasin 8 est prévu pour recevoir plusieurs capsules 6 disposées les unes derrière les autres, le système de largage de drone 4 libérant les capsules 6 les unes après les autres par l'ouverture de sortie 12, de préférence en libérant une capsule 6 à la fois.

Le conduit 10 est par exemple configuré pour recevoir les capsules 6 les unes derrières les autres.

L'ouverture de sortie 12 est positionnée et dimensionnée pour permettre la sortie des capsules 6 via l'ouverture de sortie 12. De préférence, l'ouverture de sortie 12 est positionnée et dimensionnée pour permettre la sortie d'une seule capsule 6 à la fois.

Le magasin 8 présente une pluralité de positions pour les capsules 6, incluant une première position adjacente à l'ouverture de sortie 12 et des positions suivantes.

Une fois la capsule 6 située dans la première position, adjacente à l'ouverture de sortie 12, libérée via l'ouverture de sortie 12, les autres capsules 6 encore présentes dans le conduit 10 avancent alors d'une position dans le conduit 10, de sorte que la capsule 6 située dans la deuxième position passe dans la première position est ainsi de suite.

L'ouverture de sortie 12 est de préférence située à une extrémité supérieure du conduit 10.

L'ouvertude de sortie 12 est par exemple située sur une surface supérieure 14 de la coque de l'engin sous-marin 2. La surface supérieure 14 est située sur le dessus de l'engin sous-marin 2 lorsque l'assiette de l'engin sous-marin 2 est horizontale.

Le conduit 10 s'étend suivant une ligne centrale A, qui est par exemple rectiligne ou curviligne.

Dans un exemple particulier, la ligne centrale A est rectiligne. Dans ce cas, la ligne centrale A est de préférence verticale lorsque l'assiette de l'engin sous-marin 2 est horizontale. Ceci facilite la sortie de la capsule 6 située dans la première position par l'ouverture de sortie 12.

Le magasin 8, et plus particulièrement le conduit 10, est par exemple en communication fluidique permanente avec l'extérieur via l'ouverture de sortie 12.

En variante ou en complément facultatif, le magasin 8, et plus particulièrement le conduit 10, est en communication fluidique permanente avec l'extérieur via une ouverture auxiliaire distincte de l'ouverture de sortie 12.

Lorsque l'engin sous-marin 2 est en plongée, le magasin 8, et plus particulièrement le conduit 10, est rempli d'eau environnante et les capsules 6 sont soumise à la pression de l'eau environnante.

Le système de largage de drone 4 comprend un dispositif de retenue 16 possédant une configuration de retenue (Figure 1), dans laquelle le dispositif de retenue 16 retient les capsules 6 à l'intérieur du magasin 8, et une configuration de largage (Figure 2), dans laquelle le dispositif de retenu 16 libère une capsule 6 pour la sortie de la capsule 6 par l'ouverture de sortie 12 et la remontée de la capsule 6 libérée à la surface de l'eau du fait de la flottabilité de la capsule 6.

Le dispositif de retenue 16 est par exemple configuré pour obstruer partiellement ou complètement l'ouverture de sortie 12 en configuration de retenue (Figure 1) et empêcher une capsule 6 de sortie par l'ouverture de sortie 12, et pour libérer l'ouverture de sortie 12 en configuration de largage (Figure 2) pour permettre la sortie d'une capsule 6 par l'ouverture de sortie 12.

Le dispositif de retenue 16 comprend par exemple un ou plusieurs éléments de retenue 18, chaque élément de retenue 18 étant mobile entre une position fermée (Figure 1) dans laquelle l'élément de retenue 18 s'étend dans l'ouverture 12 et empêche le passage d'une capsule 6 à travers l'ouverture de sortie 12, et une position ouverte (Figure 2), dans laquelle l'élément de retenue 18 est dégagé de l'ouverture de sortie 12 et autorise le passage d'une capsule 6 à travers l'ouverture de sortie 12.

Deux éléments de retenue 18 sont illustrés sur les Figures 1 et 2. Dans des variantes, le dispositif de retenue 16 comprend un seul élément de retenue 18 ou plus de deux éléments de retenue 18.

Dans l'exemple illustré, chaque élément de retenue 18 en position fermée s'étend en saillie dans l'ouverture de sortie 12.

Avantageusement, le système de largage de drone 4 comprend un dispositif de transmission de données 20 configuré pour transmettre des données à un drone reçu dans une capsule 6 présente dans le magasin 8, en particulier la capsule 6 située dans la première position du magasin 8, i.e. la prochaine capsule 6 qui sera larguée par le système de largage de drone 4.

Le dispositif de transmission de données 20 est par exemple configuré pour la transmission sans fil de données au drone reçu dans la capsule 6, en particulier par radiocommunication avec le drone.

Le dispositif de transmission de données 20 comprend de préférence une antenne 22 configurée pour transmettre des données au drone reçu dans la capsule 6.

L'antenne 22 est par exemple prévue sous la forme d'une boucle électromagnétique, en particulier une boule électromagnétique entourant le magasin 8, de préférence à hauteur de la première position du magasin 8.

Le dispositif de transmission de données 20 permet par exemple de transmettre des données de mission au drone présent dans la capsule 6 située dans la première position.

Les données de mission comprennent par exemple un type de mission à réaliser, une trajectoire à suivre, avec par exemple des points de passage et/ou de données d'identification d'une cible à rechercher.

Avantageusement, le système de largage de drone 4 comprend un détecteur de présence 24 configuré pour détecter la présence d'une capsule 6 dans la première position du magasin 8. Le détecteur de présence 24 permet de s'assurer de la présence, dans le magasin 8, d'une capsule 6 prête à être larguée.

Le système de largage de drone 4 comprend une unité de commande électronique 26 configurée pour piloter le dispositif de retenue 16, en particulier pour commander le basculement du dispositif de retenue 16 entre la configuration de retenue (Figure 1) et la configuration de largage (Figure 2). De préférence, le dispositif de retenue 16 et/ou l'unité de commande électronique 26 sont configurés pour le largage d'une seule capsule 6 à la fois.

Le cas échéant, l'unité de commande électronique 26 est de préférence configurée pour communiquer avec le drone de la capsule 6 située dans la première position via le dispositif de transmission de données 20 et/ou pour recevoir le signal fourni par le détecteur de présence 24.

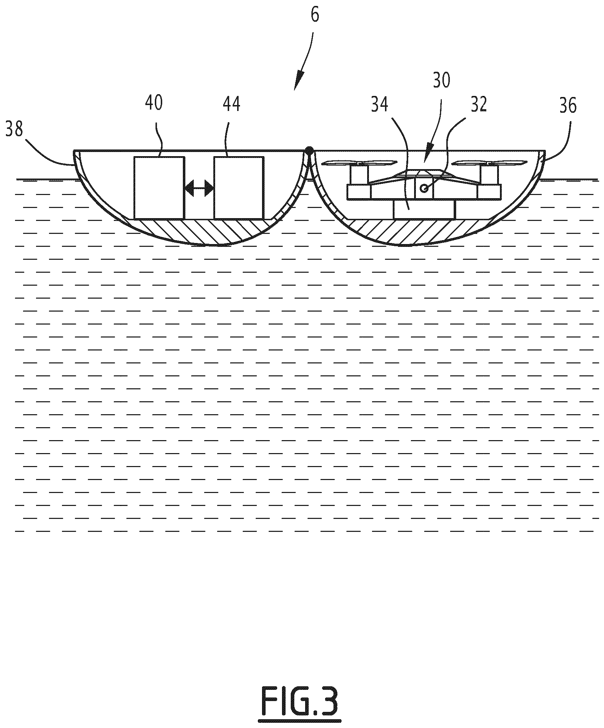

Comme illustré sur la Figure 3, la capsule 6 contient un drone 30, de préférence un seul drone 30. Le drone 30 est par exemple un drone volant, en particulier un drone à voilure tournante, comprenant un ou plusieurs rotors, en particulier quatre rotors.

Le drone 30 comprend par exemple des capteurs 32 embarqués. Les capteurs 32 comprennent par exemple un capteur d'image, en particulier une caméra.

Le drone 30 est par exemple muni d'une charge 34 embarquée sur le drone 30 et largable par le drone 30.

La charge 34 est par exemple un traceur de géolocalisation, en particulier un traceur GPS. Le drone 30 est alors par exemple configuré pour larguer le traceur de géolocalisation sur une cible, par exemple sur un navire à surveiller.

La charge 34 est par exemple munie d'un dispositif de fixation de charge permettant à la charge de se fixer sur la cible. Le dispositif de fixation de charge est par exemple configuré pour se fixer par attraction magnétique sur une partie ferromagnétique de la cible, par exemple sur une coque de la cible lorsque la cible est un navire. Le dispositif de fixation de charge comprend par exemple un ou plusieurs aimants permanents et/ou un ou plusieurs électroaimants.

La capsule 6 présente par exemple une forme sphérique ou ovoïdale. Une telle forme offre une résistance élevée à la pression extérieure. Ceci permet un largage de la capsule 6 à une profondeur élevée.

La capsule 6 présente une configuration fermée et une configuration ouverte. La capsule 6 en configuration fermée renferme le dorne30. La capsule 6 en configuration ouverte permet au drone 30 de sortir de la capsule 6. La capsule 6 est de préférence étanche lorsqu'elle est fermée.

La capsule 6 est configurée pour libérer le drone 30 lorsque la capsule 6 atteint la surface de l'eau. En particulier, la capsule 6 est configurée pour s'ouvrir lorsque la capsule 6 atteint la surface de l'eau, de manière à libérer le drone 30.

L'ouverture de la capsule 6 est par exemple commandée en fonction d'une mesure fournie par un capteur de profondeur configuré pour fournie un signal représentatif de la profondeur à laquelle la capsule 6 se situe.

La capsule 6 comprend par exemple une première partie de capsule 36 et une deuxième partie de capsule 38 mobiles l'une par rapport à l'autre entre une position fermée dans laquelle la première partie de capsule 36 et la deuxième partie de capsule 38 entourent le drone 30 en définissant un volume interne, de préférence étanche, dans lequel est reçu le drone 30, et une position ouverte, dans laquelle la première partie de capsule 36 et la deuxième partie de capsule 38 sont écartées l'une de l'autre pour ouvrir la capsule 6 et permettre au drone 30 de décoller.

La capsule 6 est par exemple configurée de manière que la première partie de capsule 36 et la deuxième partie de capsule 38 restent solidaires l'une de l'autre après l'ouverture de la capsule 6. La première partie de capsule 36 et la deuxième partie capsule 26 sont par exemple articulées l'une sur l'autre.

La première partie de capsule 36 et la deuxième partie de capsule 38 forment par exemple deux demi-coque complémentaires, dont la réunion forme une coque creuse définissant la capsule 6.

Lorsque capsule 6 présente une forme sphérique ou ovoïdale, la première partie de capsule 36 et la deuxième partie de capsule 38 sont par exemple chacune en forme de demi-coque sphérique ou demi-coque ovoïdale, la première partie de capsule 36 et la deuxième partie de capsule 38 réunies formant une coque sphérique ou ovoïdale.

Le système de largage de drone 4 comprend par exemple un système de relais de télécommunication 40 pour assurer une télécommunication entre le drone 30 et l'engin sous-marin 2, en particulier lorsque le drone 30 a été largué.

Le système de relais de télécommunication 40 est par exemple configuré pour une communication avec fil ou sans fil avec le drone 30, par exemple via un protocole Wifi, Bluetooth, Ant+, LiFi ou satellitaire.

Le système de télécommunication 40 permet de communiquer avec le drone 30 lorsque le drone 30 est en vol.

Ceci permet par exemple au drone 30 d'envoyer des données collectées à l'aide de chaque capteur 32, en particulier des images capturées par un capteur d'images.

Le système de relais de télécommunication 40 est par exemple disposé dans la capsule 6.

Le système de relais télécommunication 40 est par exemple configuré pour une communication avec fil ou sans fil entre la capsule 6 et le drone 30.

Le système de relais de télécommunication 40 est par exemple configuré pour une communication entre la capsule 6 et l'engin sous-marin 12, par exemple une communication sans fil entre la capsule 6 et l'engin sous-marin 12.La capsule 6 comprend de préférence une réserve d'énergie électrique 44 embarquée dans la capsule 6. La réserve d'énergie électrique 44 est par exemple reliée au système de relais de télécommunication pour son alimentation en énergie électrique.

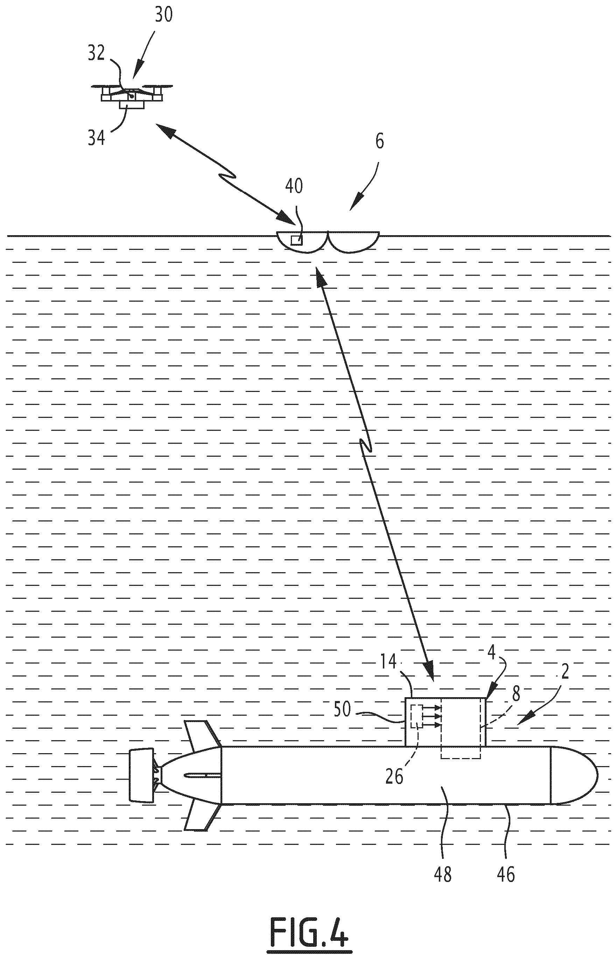

Comme illustré sur la Figure 4, l'engin sous-marin 2 comprend une coque 46 possédant une partie principale de coque 48 s'étendant suivant un axe longitudinal L et un kiosque 50 disposés sur le dessus de la partie principale de coque 48.

Le magasin 8 est situé à l'intérieur de la coque 44 et débouche à l'extérieur par l'ouverture de sortie 12, qui est de préférence disposée sur une surface supérieure 14 de la coque 44, tournée vers le haut.

De préférence, le magasin 8 est logé dans le kiosque 50 de l'engin sous-marin 2. Ceci facilite l'implantation du magasin 8 car le kiosque 50 est conçu pour recevoir des équipements, tels qu'un sas de sortie pour les opérateurs ou des antennes. La surface supérieure 14 est dans ce cas située à l'extrémité supérieure du kiosque 48.

En fonctionnement, l'engin sous-marin 2 est en plongée et des capsules 6 sont reçues dans le magasin 8, en particulier dans le conduit 10 du magasin, qui est rempli avec l'eau environnante. Les capsules 6 sont soumises à la pression de l'eau environnante. Cette pression est fonction de la profondeur de plongée de l'engin sous-marin 2.

Chaque capsule 6 tend à remonter à la surface de l'eau du fait de sa flottabilité, mais les capsules 6 sont retenue dans le magasin 8 tant que le dispositif de retenue 16 est en configuration de retenue (Figure 1).

Avant le largage d'une capsule 6, optionnellement, l'unité de commande électronique 26 commande vérifie la présence d'une capsule 6 dans la première position du magasin 8 et/ou transmet des données de mission à cette capsule 8 via le dispositif de transmission de données 20.

Pour le largage d'une capsule 6, l'unité de commande électronique 26 commande le passage du dispositif de retenue 16 en configuration de largage (Figure 2). L'ouverture de sortie 12 est libérée.

La capsule 6 située dans la première position du magasin 8 est libérée et sort par l'ouverture de sortie 12. Le dispositif de retenue 16 qui repasse en configuration de retenue une fois la capsule 6 libérée. La ou les autres capsules 6 avancent d'une position dans le magasin 8 et sont retenues par le dispositif de retenue 16 en configuration de retenue.

La capsule 6 libérée remonte à la surface de l'eau du seul fait de sa flottabilité. Une fois que la capsule 6 a atteint la surface, la capsule 6 s'ouvre pour libérer le drone 30. Le drone 30 peut s'envoler pour réaliser sa mission.

Au cours de la mission, le drone 30 capture des données à l'aide de chaque capteur 32 et, éventuellement, largue une charge 34. Les données capturées par le drone 30 sont par exemple transmises à la capsule 6 via le système de relais de télécommunication 40, en continue ou par intermittence, et éventuellement transmises de la capsule 6 à l'engin sous-marin 2 via le système de relais de télécommunication 40, en continue ou par intermittence.

Le drone 30 est par exemple configuré pour réaliser des missions en autonomie, i.e. sans intervention d'un opérateur à distance, et/ou des missions pilotées, avec intervention d'un opérateur à distance, par exemple pour donner des instructions de vol à distance, donner des instructions de capture de données à distance et/ou contrôler le drone à distance.

L'invention n'est pas limitée aux exemples et variantes décrits auparavant. D'autres exemples et d'autre variantes sont envisageables.

Dans les exemples illustrés sur les Figures 1 à 4, le véhicule sous-marin de largage ou capsule 6 est de forme sphérique ou ovoïdale. D'autres formes sont envisageables.

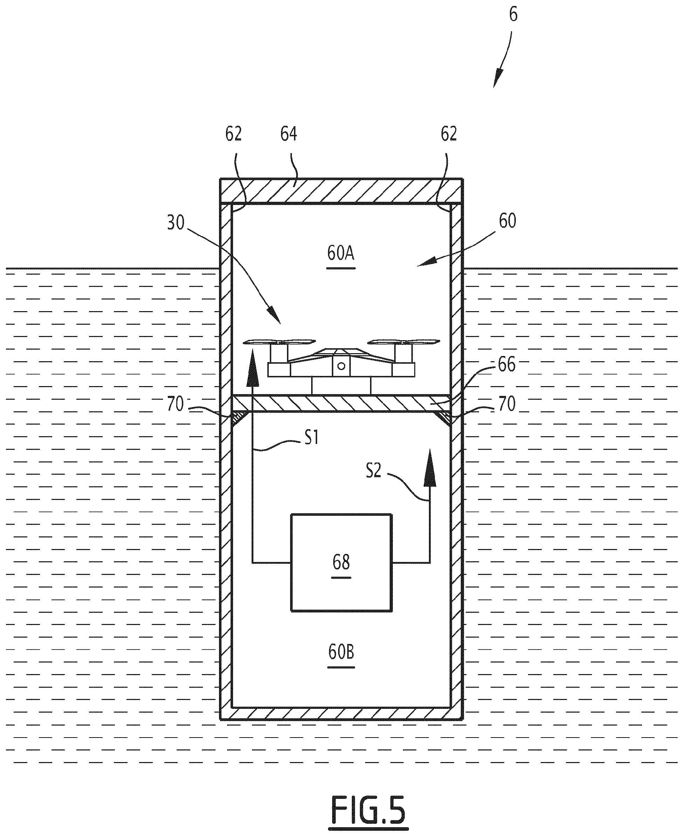

Dans des exemples, comme illustré sur la Figure 5, la capsule 6 possède une chambre 60, de préférence cylindrique, possédant une ouverture de sortie 62 fermée par un couvercle 64 amovible, et un piston 66 reçu coulissant à l'intérieur de la chambre 60 et divisant la chambre 60 en un premier compartiment 60A défini entre le piston 66 et le couvercle 64, et un deuxième compartiment 60B. Le drone 30 reçu dans la capsule 6 est disposé dans le premier compartiment 60A.

La capsule 6 comprend un dispositif d'éjection 68 configuré pour séquentiellement ouvrir le couvercle 64 puis éjecter le drone 30 de la capsule 6.

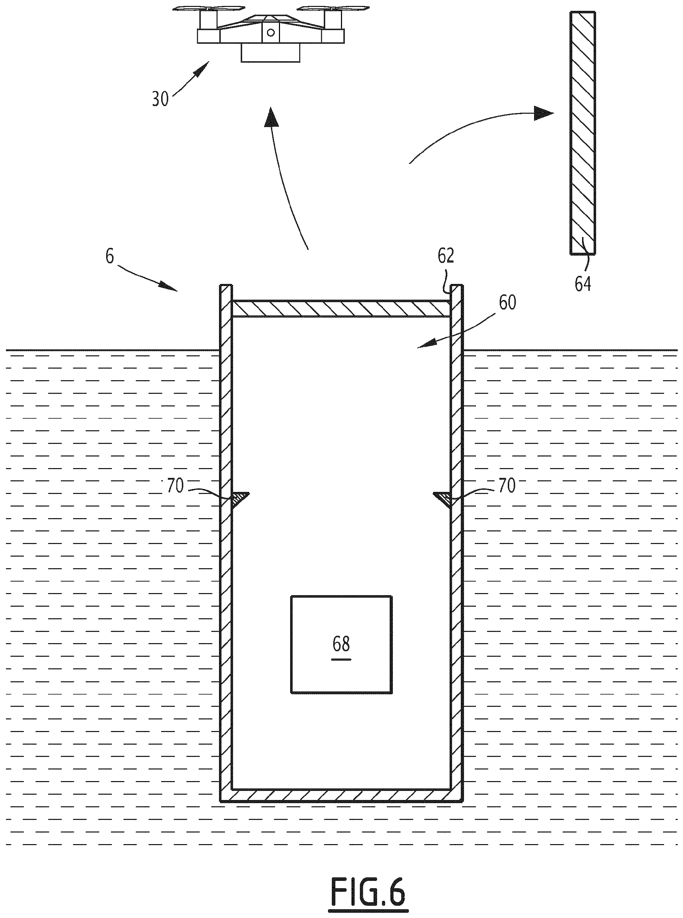

Le dispositif d'éjection 68 est par exemple un dispositif pneumatique configuré pour séquentiellement générer une surpression dans le premier compartiment 60A (Flèche S1) pour provoquer l'éjection du couvercle 64 puis générer une surpression dans le deuxième compartiment 60B (Fleche S2) pour déplacer la piston 66 vers l'ouverture de sortie 62 de la chambre 60 et éjecter le drone 30 en dehors de la chambre 60, comme illustré sur la Figure 6.

De préférence, la capsule 6 comprend des butées 70 pour empêcher le déplacement du piston 66 du côté du deuxième compartiment 60B extrémité lors de la génération de la surpression dans le premier compartiment 60A.

De préférence, le drone 30 est dans un état de veille active avant son éjection et dans un état actif après son éjection, le drone 30 à l'état actif s'activant pour voler.

Avantageusement, le drone 30 est configuré pour détecter automatiquement son éjection de la capsule 6 et pour passer automatiquement de l'état de veille active à l'état actif dans lequel le drone 30 se met à voler lorsque le drone 30 détecte son éjection hors de la capsule 6.

Le drone 30 est par exemple configuré pour effectuer des mesures inertielles (déplacement, vitesse et/ou accélération du drone 30), au moins pendant que le drone 30 est en état de veille active, par exemple à l'aide d'une centrale inertielle embarquée du drone 30 et/ou d'un ou plusieurs accéléromètres du drone 30, et pour détecter l'éjection du drone 30 en fonction des mesures inertielles, lorsque le drone 30 est en état de veille active.

Dans les exemples illustrés sur les Figures 1 à 4, le système de relais de télécommunication 40 est disposé dans la capsule 6 de largage du drone 30.

Dans des exemples, un système de relais de télécommunication 40 est disposé dans une bouée de communication 80 distincte de la capsule 6. La bouée de communication 80 est par exemple largable depuis l'engin sous-marin 2, et de préférence récupérable dans l'engin sous-marin 2.

Le système de relais de télécommunication 40 est par exemple configuré pour une communication sans fil avec le drone 40, en particulier via les protocoles de télécommunication sans fil indiqués plus haut.

Le système de relais de télécommunication 40 est par exemple configuré pour une communication filaire avec l'engin sous-marin 2, via une liaison filaire de communication 82 s'étendant entre la bouée de communication 80 et l'engin sous-marin 2. La liaison filaire de communication 82 est par exemple une liaison optique comprenant une ou plusieurs fibres optiques pour l'échanges de signaux de communication entre le système de relais de télécommunication 40 et l'engin sous-marin 2.

L'utilisation d'une bouée de communication 80 permet d'utiliser la bouée de communication 80 pour plusieurs drones 30. Ceci est plus pratique et plus économique que l'utilisation d'un système de relais de télécommunication 40 respectif pour chaque drone 30.

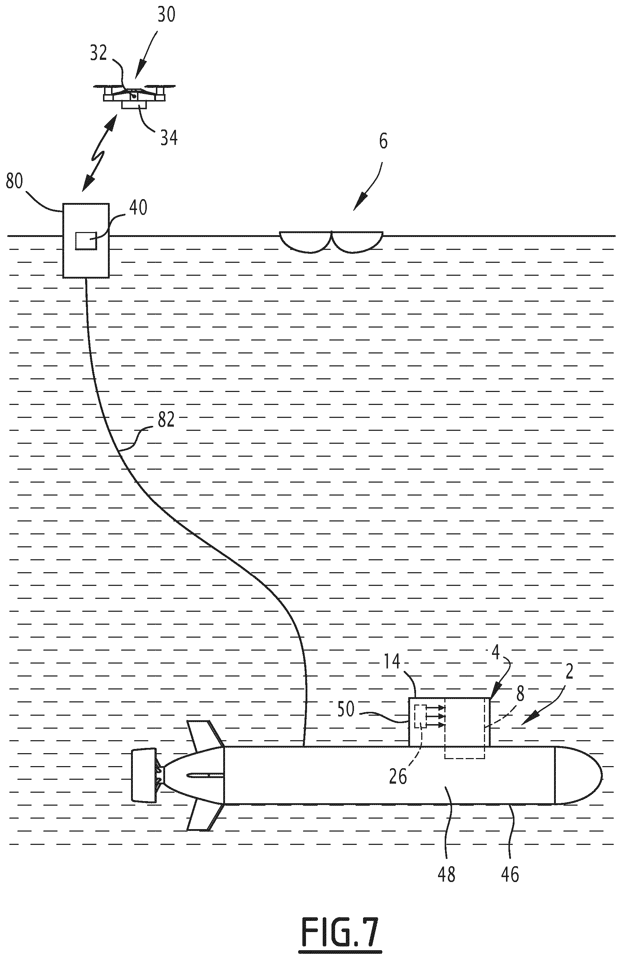

Sur les Figures 3 et 7, une capsule 6 de forme sphérique ou ovoïdale est représentée, mais l'utilisation d'un système de relais de télécommunication 40 logé dans la capsule 6 ou dans une bouée de communication 80 est possible avec tout type de capsule 6, y inclus une capsule 6 telle qu'illustrée sur les Figures 5 et 6.

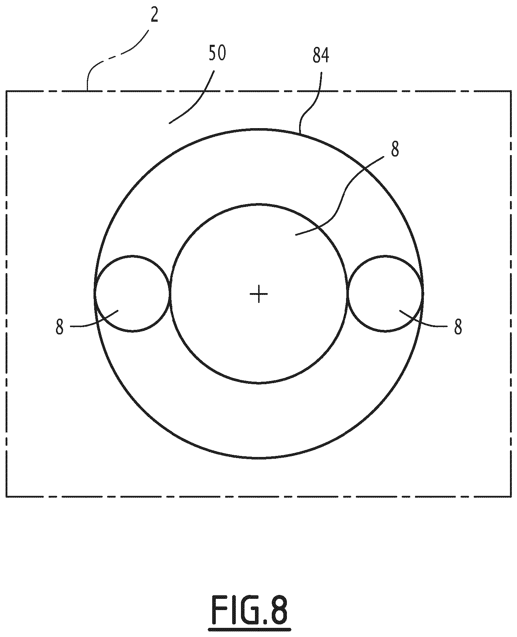

Comme illustré sur la Figure 8, dans des exemples, le système de largage de drone 4 possède plusieurs magasins 8 disposés côté à côte dans un même conduit 84. Le conduit 84 est par exemple un logement cylindrique prévu dans l'engin sous-marin 2, en particulier dans un kiosque 50 de l'engin sous-marin 2.

Dans des exemples, comme illustré sur la Figure 8, le système de largage de drone 4 possède au moins deux magasins 8 présentant des dimensions transversales différentes, en particulier deux magasins 8 de section circulaires de diamètres différents. Ceci permet de prévoir un premier magasin 8 pour des premier drones de relativement petite dimension et un deuxième magasin pour des deuxièmes drones de relativement grande dimension. Des drones de tailles différentes peuvent être prévus pour porter des charges différentes et réaliser des missions différentes.

Dans un exemple, comme illustré sur la Figure 8, le système de largage de drone comprend un premier magasin 8 ayant une section de grand diamètre et un petit magasin ayant une section de petit diamètre.

## Revendications

1. Système de largage de drone à partir d'un engin sous-marin, le système de largage comprenant :
- une pluralité de capsules (6), chaque capsule (6) renfermant un drone (30) et présentant une flottabilité permettant à la capsule (6) de remonter à la surface de l'eau, chaque capsule (6) étant configurée pour s'ouvrir une fois que la capsule (6) a atteint la surface de l'eau pour libérer le drone (30),
- un magasin (8) pour le stockage des capsules (6), le magasin (8) étant en communication fluidique permanente avec l'extérieur de sorte que l'eau environnante remplit le magasin (8) lorsque l'engin sous-marin (2) est en plongée, le magasin (8) possédant une ouverture de sortie (12) pour les capsules (12), et
- un dispositif de retenue (16) possédant une configuration de retenue dans laquelle le dispositif de retenue (16) retient les capsules (6) à l'intérieur du magasin (8) et une configuration de largage dans laquelle le dispositif de retenue (16) libère une capsule (6) pour la sortie de la capsule (6) via l'ouverture de sortie (12) et la remontée de la capsule (6) libérée à la surface de l'eau du fait de la flottabilité de la capsule (6).

2. Système de largage selon la revendication 1, comprenant un dispositif de transmission (20) configuré pour la transmission de données de mission au drone d'une ou plusieurs capsules (6) reçues dans le magasin (8) avant le largage de la ou des capsules (6).

3. Système de largage selon la revendication 2, dans lequel le dispositif de transmission (20) est configuré pour la transmission de données de mission au drone (30) de la capsule (6) qui sera la prochaine capsule (6) larguée.

4. Système de largage selon la revendication 2 ou 3, dans lequel le dispositif de retenue (16) est configuré pour libérer une capsule (6) seulement après la transmission de données de mission au drone (30) de cette capsule (6) par le dispositif de transmission (20).

5. Système de largage selon l'une quelconque des revendications précédentes, dans lequel chaque capsule (6) est étanche et résistante à la pression de l'eau, par exemple au moins jusqu'à une pression de 50 bars, de préférence au moins jusqu'à une pression de 700 bars.

6. Système de largage selon l'une quelconque des revendications précédentes, dans lequel chaque capsule (6) comprend au moins deux parties de capsule (36, 38), le drone (30) étant reçu dans une des parties de capsule (36, 38).

7. Système de largage selon l'une quelconque des revendications précédentes, comprenant un système de relais de télécommunication (40) configuré pour communiquer à distance avec le drone (30) et/ou avec l'engin sous-marin (2).

8. Système de largage selon la revendication 7, dans lequel le système de relais de télécommunication (40) est disposé dans la capsule (6) ou dans une bouée de communication (80) distincte de la capsule (6) et, de préférence, largable à partir de l'engin sous-marin (2).

9. Système de largage selon l'une quelconque des revendications précédentes, dans lequel le drone (30) d'au moins une des capsules (6) est équipé d'un traceur de géolocalisation (34), un particulier un traceur GPS, largable par le drone (30) sur une cible à surveiller, en particulier un navire à surveiller.

10. Système de largage selon la revendication 9, dans lequel le traceur de géolocalisation (34) est muni d'un dispositif de fixation configuré pour retenir le traceur de géolocalisation (34) sur une partie ferromagnétique de la cible à surveiller, par exemple une partie d'une coque de la cible à surveiller.

11. Système de largage selon l'une quelconque des revendications précédentes, dans lequel le magasin (8) est orienté sensiblement verticalement lorsque l'assiette de l'engin sous-marin est horizontale.

12. Système de largage selon l'une quelconque des revendications précédentes, dans lequel la capsule (6) comprend une chambre (60) possédant une ouverture de sortie (62) fermée par un couvercle (64) amovible et un piston (66) reçu coulissant dans la chambre (60) et séparant la chambre (60) en un premier compartiment (60A), délimité entre le piston (66) et le couvercle (64), et recevant le drone (30), et un deuxième compartiment (60B).

13. Système de largage selon la revendication 12, dans lequel la capsule (6) comprend un dispositif d'éjection, par exemple pneumatique, configuré pour séquentiellement générer une suppression dans le premier compartiment (60A) pour éjecter le couvercle (64) puis générer une surpression dans le deuxième compartiment (60B) pour pousser le piston (66) vers l'ouverture de sortie et éjecter le drone (30) hors de la chambre (60).

14. Système de largage selon l'une quelconque des revendications précédentes, dans lequel le magasin (8) est prévu pour recevoir plusieurs capsules (6) disposées les unes derrières les autres dans le magasin (8) et pour libérer les capsules (6) les unes après les autres via l'ouverture de sortie (12).

15. Engin sous-marin comprenant un système de largage de drone selon l'une quelconque des revendications précédentes.

16. Engin sous-marin selon la revendication 15, le magasin (8) étant logé dans un kiosque de l'engin sous-marin de manière à larguer les capsules (6) par un sommet du kiosque.
